# EUROPÄISCHE PATENTSCHRIFT

(11) **EP 3 708 395 B1**
(45) Veröffentlichungstag und Bekanntmachung des Hinweises auf die Patenterteilung: **13.10.2021**
(21) Anmeldenummer: 20159833.1
(22) Anmeldetag: 27.02.2020
(51) Int. Cl.: B60H 1/24, B60H 1/34

(54) **LUFTAUSSTRÖMER FÜR DEN INNENRAUM EINES KRAFTFAHRZEUGES**
AIR OUTLET FOR THE INTERIOR OF A MOTOR VEHICLE
DISPOSITIF D'ÉVACUATION D'AIR POUR L'HABITACLE D'UN VÉHICULE AUTOMOBILE

(30) Priorität: 11.03.2019 DE 102019106086
(43) Veröffentlichungstag der Anmeldung: 16.09.2020
(73) Patentinhaber: GRAMMER Interior Components GmbH, 74736 Hardheim (DE)
(72) Erfinder: Stehle, Pierre, 61191 Rosbach (DE)
(74) Vertreter: Ostriga Sonnet Wirths & Vorwerk

(56) Entgegenhaltungen:
- EP-A1- 0 566 474
- WO-A1-2015/074955
- FR-A1- 2 912 085

## Beschreibung

Die Erfindung betrifft einen Luftausströmer für den Innenraum eines Kraftfahrzeugs mit den Merkmalen des Oberbegriffs des Anspruchs 1.

Derartige Luftausströmer sind beispielsweise aus der EP 0 566 474 A1 hinlänglich bekannt und dienen der Luftzufuhr in den Kraftfahrzeuginnenraum, um beispielsweise Kondensat an einer Windschutzscheibe abzutrocknen. Solche als Defroster ausgebildeten Luftausströmer weisen Luftausströmöffnungen und wenigstens eine feststehende Lamelle auf, welche einen Luftstrom auf die Windschutzscheibe ausrichtet und hinsichtlich ihrer Leistungsfähigkeit strengen gesetzlichen Normen unterliegen.

Die WO 2015/074955 A1 beschreibt einen Luftausströmer für den Innenraum eines Kraftfahrzeugs, mit einem Gehäuse, mit einer vom Gehäuse ausgebildeten Luftaustrittsöffnung, die mit einer Abdeckung versehen ist, und mit einer einzelnen Lamelle zum Ausrichten des Luftstroms, die um eine Achse schwenkbar im Gehäuse angeordnet ist. Aus der EP 3 164 280 B1 sind beispielsweise auch gattungsgemäße

Luftausströmer bekannt, welche horizontale und vertikale Lamellen aufweisen, die in einem Gehäuse schwenkbeweglich und kreuzweise ineinander geschachtelt gelagert sind. Derartige Luftausströmer sind beispielsweise in der Armaturentafel oder der Seitenverkleidung im Fahrzeuginnenraum installiert und ermöglichen es, den Passagieren den Luftstrom gezielt und komfortabel auszurichten.

Aus der FR 2 912 085 A1 sind zudem Luftausströmer bekannt, welche in dem Kopfteil eines Autositzes angeordnet sind. Diese dienen der individuellen Abkühlung der Person, welche auf dem Autositz Platz genommen hat. Diese Luftausströmer bilden auch Gehäuse aus, in welchen eine den Luftstrom ausrichtende Lamelle einsitzt.

Aufgrund des zukünftigen teil- und vollautonomen Fahrens, rückt in der Fahrzeugindustrie die ästhetische Ausgestaltung des Fahrzeuginnenraumes seit geraumer Zeit in den Vordergrund, um für den Fahrgast eine Wohlfühlatmosphäre zu schaffen. Als besonders ästhetisch und qualitativ hochwertig werden dabei einheitliche Oberflächen wahrgenommen, die einer optischen Vereinheitlichung des Innenraumdesigns dienen.

Die aus dem Stand der Technik bekannten Luftausströmer weisen allerdings Luftausströmöffnungen aus, wodurch die gewünschte optische Einheitlichkeit des Armaturenbrettes aufgelöst wird und der ästhetische Gesamteindruck des Fahrzeuginnenraumes deutlich vermindert ist.

Neben der optischen Uneinheitlichkeit, unterliegen die Luftausströmer der Gefahr, dass zuvor auf dem Armaturenbrett abgelegt Fremdkörper unbeabsichtigt in die Luftausströmöffnungen gelangen können und somit die Funktionalität der Luftausströmer erheblich einschränkt ist. Ein Entfernen dieser Fremdkörper ist mit großem Aufwand verbunden.

Es ist deshalb die Aufgabe der Erfindung, einen Luftausströmer für den Innenraum eines Kraftfahrzeugs zu schaffen, der bei vollständiger Funktionalität die Einhaltung der gesetzlich vorgeschriebenen Leistungsfähigkeitsnorm erfüllt und das Eindringen von Fremdkörpern verhindert sowie die gestiegenen optischen Anforderungen an das Innenraumdesign berücksichtigt.

Aus dem nicht gattungsgemäßen Stand der Technik sind beispielsweise Streckmetalle und Streckmetallen nachgeahmte Strukturen, beispielsweise aus Kunststoff, bekannt. Diese dienen beispielsweise der großflächigen Abdeckung des Armaturenbrettes oder von Lautsprecheröffnungen und schaffen somit eine einheitliche Oberfläche, die ästhetisch besonders ansprechend ist. Die Abdeckung von Luftausströmern wird durchgängig vermieden, weil diese den gerichteten Luftstrom in einen diffusen Luftstrom wandelt. Im Bereich der Defroster kann somit nicht die vorgeschriebene gesetzliche Leistungsnorm erfüllt werden. Auch im Bereich andere Luftausströmer verzichtet man auf die Abdeckung aus Streckmetall oder Streckmetallen nachgeahmten Strukturen.

Gelöst wird die Aufgabe von einem Luftausströmer für den Innenraum eines Kraftfahrzeuges mit den Merkmalen des Anspruches 1, insbesondere mit dessen kennzeichnenden Merkmalen, wonach mehrere parallel zueinander ausgerichtete Lamellen im Gehäuse angeordnet sind, wobei die Lamellen um eine Achse schwenkbar im Gehäuse angeordnet sind, sodass der Lamellenwinkel gegenüber der Gehäuselängsachse veränderbar ist und wobei die streckmetallnahe Kante in einer Lamellenkante ausläuft und wobei die Schwenkachse im Wesentlichen mit der Lamellenkante zusammenfällt.

Die Erfindung überwindet das Vorurteil des Standes der Technik, dass Streckmetalle nicht luftrichtend wirken. Überraschend hat es sich herausgestellt, dass der gerichtete Luftstrom trotz Durchströmens des Streckmetalls seine definierte Ausrichtung beibehält. In aufwendigen Versuchen hat sich gezeigt, dass der gerichtete Luftstrom nach Durchtritt durch das Streckmetall erhalten bleibt, wenn die streckmetallnahe Kante der Lamelle bis auf ein der Montage geschuldetes Passungsspiel an die Streckmetallabdeckung herangeführt ist. Die Leistungsfähigkeit eines Defrosters wird somit durch die Anordnung der Steckmetallabdeckung an der Luftausströmöffnung des Luftausströmers nicht herabgesetzt und entspricht weiterhin den gesetzlich vorgeschriebenen Anforderungen.

Der Luftausströmer gemäß EP 3 164 280 B1 lässt sich ebenfalls mit einer derartigen Streckmetallabdeckung versehen. Auch hier verbleibt der Luftstrom nach dem Durchtritt aus der Streckmetallabdeckung gerichtet, wenn darauf geachtet wird, dass die streckmetallnahe Kante der Lamelle derart dicht an die Streckmetallabdeckung herangeführt ist, dass lediglich das der Montage geschuldete Passungsspiel zwischen Streckmetall und streckmetallnaher Kante der Lamelle verbleibt. Somit überwindet die Erfindung die unverrückbare Erkenntnis, dass ein die Streckmetallabdeckung durchströmender Luftstrom nicht ausrichtbar ist. Die Erfindung erlaubt nunmehr die Gefahr des Eindringens von Fremdkörpern zu verhindern. Die Maschen der Streckmetallabdeckung sind derart eng aneinander angeordnet, dass in die Öffnungen allerhöchstens winzige, die Funktionalität des Luftausströmers nicht beeinträchtigende Fremdkörper, eindringen.

Besonders vorteilhaft ist die Streckmetallabdeckung gleichwohl aufgrund ihrer Struktur. Sie ist ästhetisch ansprechend und erfüllt die hohen optischen Anforderungen der Fahrzeugindustrie an den Fahrzeuginnenraum. Da nun auch Defroster und andere Luftausströmer problemlos ohne Funktionalitätsverlust mit dem Streckmetall abdeckt werden können, kann das komplette Armaturenbrett großflächig und einheitlich ausgestaltet werden, wodurch das gesamtheitliche Innenraumdesign des Kraftfahrzeuges optimiert ist.

Vorteilhaft ist zudem, dass die Lamellen um eine Achse schwenkbar im Gehäuse angeordnet sind, sodass der Lamellenwinkel gegenüber der Gehäuselängsachse veränderbar ist.

Ein weiterer Vorteil ist, dass die streckmetallnahe Kante in einer Lamellenkante ausläuft und dass die Schwenkachse im Wesentlichen mit der Lamellenkante zusammenfällt. Besonders vorteilhaft an dieser Ausführungsform ist, dass der Abstand zwischen Lamellenkante und Streckmetallabdeckung trotz Schwenkbewegung der Lamelle auf ein Minimum reduziert ist. Der die Streckmetallabdeckung verlassende Luftstrom ist somit ausrichtbar.

Vorteilhaft ist zudem, dass mehrere parallel zueinander ausgerichtete Lamellen im Gehäuse angeordnet sind. Eine Ausrichtung des Luftstromes mittels mehrerer parallel zueinander ausgerichteten Lamellen in einem Gehäuse ist vorteilhaft, da der Luftstrom besonders feingliedrig ausgerichtet aus dem Luftausströmer entlassen werden kann. Zudem ist es auch vorgesehen, dass die Schwenkachse der Lamellen derart streckmetallnah angeordnet ist, dass der durch die Schwenkbewegung der Lamellen zunehmende Abstand zwischen Lamellenkante und Streckmetallabdeckung noch den die Abdeckung gerichtet verlassenden Luftstrom ermöglicht.

Der Luftstrom wird somit zunächst mittels der schwenkbaren Lamellen im Gehäuseinnenraum ausgerichtet und anschließend an der Streckmetallabdeckung umgeleitet ohne dass Verwirbelungen zwischen Lamelle und Streckmetallabdeckung auftreten. Der Luftstrom wird somit gerichtet in den Innenraum des Kraftfahrzeuges geleitet.

In einer weiteren Ausführungsform des Luftausströmers ist vorteilhafterweise vorgesehen, dass die Streckmetallabdeckung eine konvexe oder eine konkave Krümmung aufweist, deren Krümmungsebene zur Schwenkachse der Lamelle parallel ausgerichtet ist. Die Krümmung der Streckmetallabdeckung kann beispielsweise konvex oder konkav sein und einen steten Radius aufweisen, wobei die Krümmung dann walzenförmig ausgebildet ist. Zudem ist auch eine Krümmung mit unstetem Radius, beispielsweise mit ovalem Verlauf, vorstellbar.

Sowohl die konvexe als auch die konkave Krümmung der Streckmetallabdeckung löst eine Luftumlenkung des verlassenden Luftstroms aus, wodurch neuartige Strömungsbilder generiert werden können. Der an einer konvex gekrümmten Streckmetallabdeckung umgelenkte Luftstrom wird fächerartig in den Personeninnenraum entlassen. Eine derartige Auffächerung bedingt eine großflächige Beströmung der Passagiere oder der Windschutzscheibe. Somit kann in kurzer Zeit eine größere Fläche mit Luft bedeckt werden. Die Intensität des Luftstroms kann dabei abnehmen und ist dann besonders angenehm für den Fahrgast.

Im Gegensatz dazu bedingt eine konkav gekrümmte Streckmetallabdeckung, dass der austretende Luftstrom gebündelt wird und somit eine präzise, linienförmige Ausrichtung des Luftstromes möglich ist. Dieser linienförmig austretende Luftstrom kann beispielsweise gezielt auf eine mit Kondensat bedeckte Stelle an der Windschutzscheibe gerichtet werden, um diese schnell abzutrocknen. Die konkave gekrümmte Streckmetallabdeckung gewährleistet somit eine präzise und effektive Belüftung des Fahrgastinnenraumes.

Es ist weiterhin vorgesehen, dass der Luftstrom mittels einer Kombination aus der gekrümmten Streckmetallabdeckung und der hinter der gekrümmten Streckmetallabdeckung angeordneten Lamellen gerichtet wird. Diese Kombination ermöglicht eine individuelle Ausrichtung des Luftstromes für den Fahrgast, wobei der Luststrom leicht an jede Situation angepasst werden kann.

Denkbar ist zudem, dass die Stegwände der gekrümmten Streckmetallabdeckung jeweils eine Ebene aufspannen und dass diese jeweils die Gehäuselängsachse schneiden, wobei die jeweiligen Schnittwinkel von Ebene und Gehäuselängsachse mit zunehmendem Abstand der jeweiligen Stegwände von der Gehäuselängsachse zunehmen.

Angedacht ist außerdem, dass der Betrag der Schnittwinkeländerung von Schnittwinkel zu Schnittwinkel konstant ist, wie bei einer walzenförmigen Ausgestaltung der Streckmetallabdeckung. Allerdings ist es auch möglich, dass der Betrag der Schnittwinkeländerung von Schnittwinkel zu Schnittwinkel unterschiedlich ist, wie bei einer gekrümmten Steckmetallabdeckung mit unstetem Radius.

Zudem sieht ein Ausführungsbeispiel der Erfindung vor, dass der Luftausströmer als Defroster für die Windscheibe eines Kraftwagens ausgebildet ist. Allerdings sind auch andersartige Luftausströmer vorstellbar.

Weitere Vorteile der Erfindung sowie ein besseres Verständnis derselben ergeben sich aus der nachfolgenden Beschreibung mehrerer Ausführungsbeispiele. Es zeigen:
- Figur 1:: perspektivische Übersichtsdarstellung eines Luftausströmers mit Streckmetallabdeckung,
- Figur 2:: Schnittdarstellung einer nicht erfindungsgemäßen Ausführungsform des Luftausströmers gemäß Schnittlinien A-A in Figur 1 mit starren luftleitenden Lamellen,
- Figur 3:: Schnittdarstellung einer ersten, erfindungsgemäßen Ausführungsform des Luftausströmers gemäß Schnittlinie A-A in Figur 1 mit schwenkbaren luftleitenden Lamellen,
- Figur 4:: Schnittdarstellung der ersten Ausführungsform des Luftausströmers gemäß Schnittlinie A-A in Figur 1 mit gegenüber einer Gehäuseachse verschwenkten luftleitenden Lamellen,
- Figur 5:: Vergrößerte Ausschnittdarstellung einer Streckmetallabdeckung zur Prinzipdarstellung des Luftausströmers mit gehäuseachsparallelem Luftstrom,
- Figur 6:: Vergrößerte Ausschnittdarstellung der Streckmetallabdeckung zur Prinzipdarstellung des Luftausströmers mit abgelenktem Luftstrom,
- Figur 7:: Schnittdarstellung einer zweiten Ausführungsform mit konvex gekrümmter Streckmetallabdeckung,
- Figur 8:: Schnittdarstellung einer dritten Ausführungsform des Luftausströmers mit konkav gekrümmter Streckmetallabdeckung.

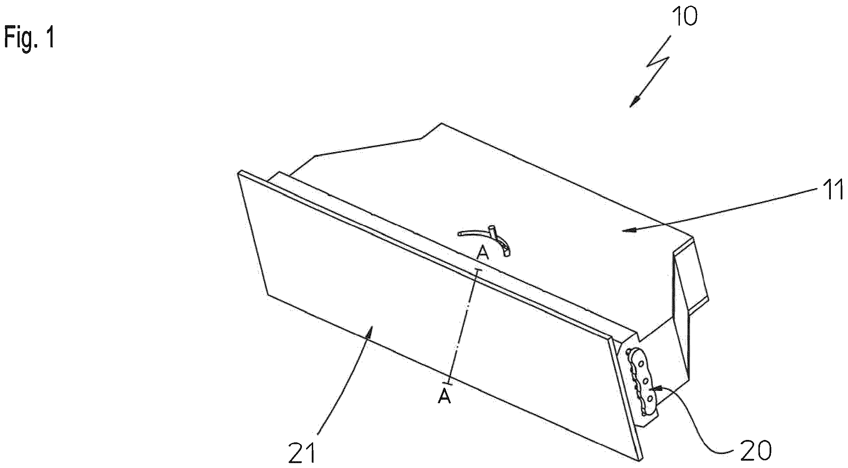

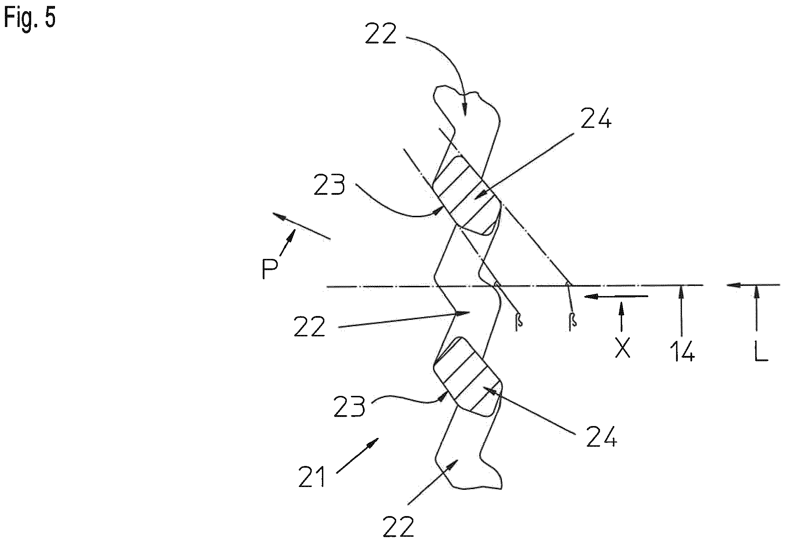

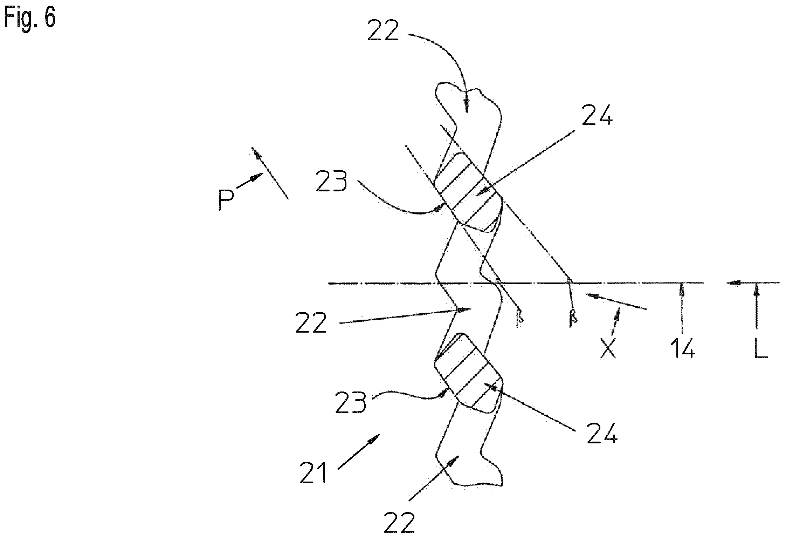

Der erfindungsgemäße Luftausströmer ist in den Figuren 1, 3-4 sowie 7 und 8 in seiner Gesamtheit dargestellt und insgesamt mit dem Bezugszeichen 10 versehen. Die Figuren 5 und 6 zeigen das Wirkprinzip des erfindungsgemäßen Luftausströmers.

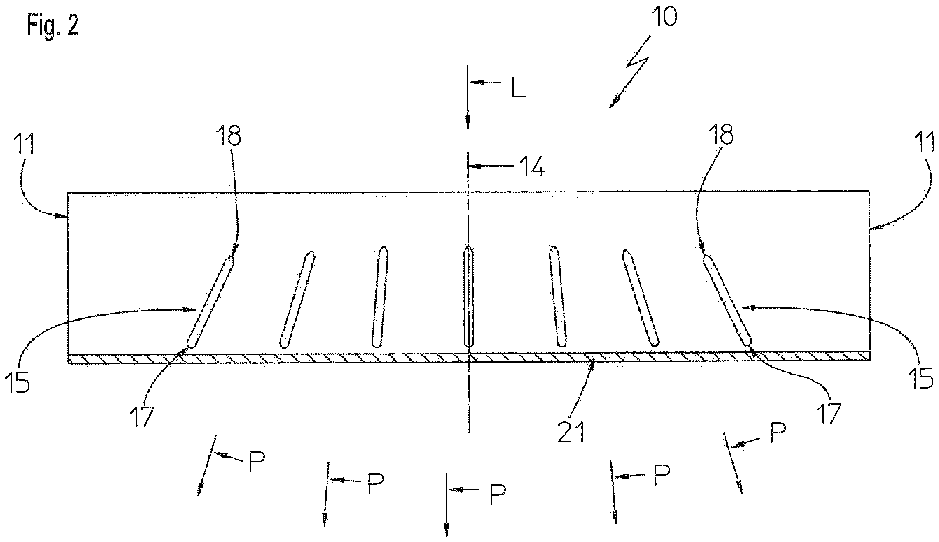

In den Figuren 1 bis 4 sowie 7 und 8 ist der Luftausströmer 10 gezeigt, welcher ein Gehäuse 11 aufweist, das eine Luftausströmöffnung 12 und eine Lufteinströmöffnung 13 ausbildet. Im Gehäuse 11 erstreckt sich von der Lufteinströmöffnung 13 bis zu der Luftausströmöffnung 12 parallel zu einem Luftstrom L (siehe Figur 2 bis 8) eine Gehäuselängsachse 14.

In den Figuren 1 bis 8 sind im Gehäuse 11 luftleitende Lamellen 15 angeordnet. Die luftleitenden Lamellen 15 weisen sowohl eine luftausströmöffnungsnahe Lamellenkante 17 als auch eine luftausströmöffnungsferne Lamellenkante 18 auf. Mittels der luftleitenden Lamellen 15 wird der die Luftausströmöffnung 12 verlassende Luftstrom L gerichtet. Zudem schließen die luftleitenden Lamellen 15 mit der Gehäuseachse 14 jeweils einen Lamellenwinkel α ein.

In der Figur 2 sind die luftleitenden Lamellen 15 starr und fächerartig im Gehäuse 11 angeordnet, wie es üblicherweise für einen Defroster üblich ist. Diese Anordnung dient der fächerartigen Beströmung der Windschutzscheibe, um beispielsweise dort auftretendes Kondensat abzutrocknen (nicht dargestellt). Der in der Figur 2 dargestellte Luftausströmer ist nicht erfindungsgemäß.

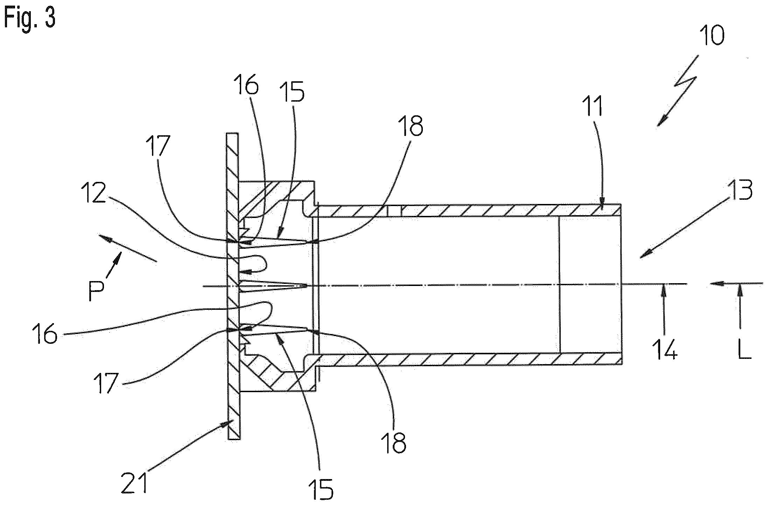

In den Figuren 3 bis 8 ist ein Luftausströmer 10 für die Kraftfahrzeuginnenraumbelüftung dargestellt, welcher zueinander parallel ausgerichtete, luftleitenden Lamellen 15 aufweist, die mittels einer Schwenkachse 16 beweglich im Gehäuse 11 angeordnet sind. Die Schwenkachse 16 fällt im Wesentlichen mit der luftausströmöffnungsnahen Lamellenkante 17 zusammen. Die luftleitenden Lamellen 15 sind anhand eines Steuerbauteils 20 (siehe Figur 1) im Gehäuse 11 verschwenkbar. Die luftleitenden Lamellen 15 sind zu einer Lamellengruppe zusammengefasst.

Der Lamellenwinkel α ist von der Ausrichtung der luftleitenden Lamellen 15 im Gehäuse 11 abhängig.

An dieser Stelle sei darauf hingewiesen, dass der Luftausströmer 10 neben der ersten luftleitenden Lamellengruppe eine zweite Lamellengruppe aufweisen kann, wobei die luftleitenden Lamellen 15 der zweiten Lamellengruppe orthogonal zu den luftleitenden Lamellen 15 der ersten Lamellengruppe im Gehäuse 11 angeordnet sind.

Die Luftausströmöffnung 12 des Luftausströmers 10 ist in der Figur 2 beziehungsweise in den Figuren 3 bis 8 mit einer Streckmetallabdeckung 21 versehen.

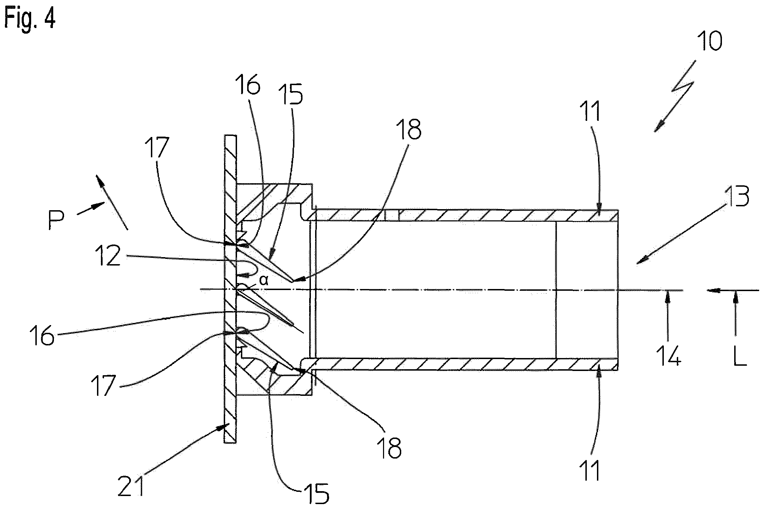

In den Figuren 3 und 4 wird eine erste Ausführungsform des Luftausströmers 10 gezeigt. Die luftleitenden Lamellen 15 dieses Luftausströmers 10 sind beweglich im Gehäuse 11 angeordnet.

In der Figur 3 sind die luftleitenden Lamellen 15 parallel zur Gehäuselängsachse 14 angeordnet. Der Luftstrom L wird hier ausschließlich durch die Streckmetallabdeckung 21 in seiner Ausströmrichtung beeinflusst. Diese Ablenkung des Luftstroms L wird durch den Richtungspfeil P dargestellt.

In der Figur 4 sind die luftleitenden Lamellen gegenüber der Gehäuselängsachse 14 verschwenkt und schließt einen Lamellenwinkel α größer 0° ein. Hierdurch wird der Luftstrom L vorgerichtet an die Streckmetallabdeckung 21 geströmt, so dass der Luftstrom L entsprechend des Pfeiles P die Streckmetallabdeckung 21 verlässt. In dieser Ausführungsform beeinflussen sowohl die luftleitenden Lamellen 15 als auch das Streckmetallabdeckung 21 den die Streckmetallabdeckung 21 verlassenden Luftstrom L in seiner Austrittrichtung.

Im Folgenden wird nun die Funktionsweise des erfindungsgemäßen Luftausströmers anhand der Figuren 5 und 6 erläutert:
In den Figuren 5 und 6 ist die Streckmetallabdeckung 21 ausschnittsweise und stark vergrößert dargestellt. Diese Figuren 5 und 6 zeigen das Wirkprinzip der Streckmetallabdeckung. Es ist deutlich zu erkennen, dass die Streckmetallabdeckung 21 als Maschen 22 ausgebildete Öffnungen aufweist, welchen von Stegen 23 eingefasst sind. Diese Stege 23 sind schräg verlaufend in der Steckmetallabdeckung 21 eingearbeitet. Die Stege 23 bilden Stegwände 24 aus, die Stegwandwinkel β mit der Gehäuselängsachse 14 einschließen. Das Stegwandwinkelmaß ist größer 0° und kleiner 90° In einer bevorzugten Ausführungsform haben die Stegwandwinkel β ein Maß von 20° bis 70°. In dem dargestellten Ausführungsbeispiel betragen die Stegwandwinkel β ca. 45°.

In der Figur 5 ist die Luftanströmrichtung des Luftausströmers 10 mit dem Pfeil X gezeigt, welcher gehäuseachsparallel ausgerichtet ist.

Die Stegwandwinkel β der Stegwände 24 der Streckmetallabdeckung 21 haben einen Betrag eines ersten Winkels. Die Stegwandwinkel β betragen in diesem konkreten Ausführungsbeispiel ca. 45° in Bezug auf die Gehäuselängsachse 14. Der Luftstrom L, welcher von der Lufteinströmöffnung 13 kommend gehäuselängsachsparallel ausgerichtet ist, wird an die Stegwände 24 der Streckmetallabdeckung 21 geströmt. An diesen Stegwänden 24 wird der vorgerichtet Luftstrom L nun zusätzlich durch den Stegwandwinkel β gerichtet. In diesem Ausführungsbeispiel beträgt die Resultierende somit ca. 45°. Die Richtung des die Streckmetallabdeckung 21 verlassenden Luftstroms L ist anhand des Richtungspfeiles P dargestellt.

In der Figur 6 ist die Luftanströmrichtung des Luftausströmers 10 mit dem Pfeil X gezeigt, wobei der Luftstrom L eine erste Ablenkung in Bezug auf die Gehäuselängsachse 14 erfährt. In diesem Ausführungsbeispiel beträgt die Ablenkung ca. 30°. Der vorgerichtete Luftstrom L beströmt anschließend die Stegwände 24 der Streckmetallabdeckung 21. Die Stegwandwinkel β der Stegwände 24 haben ebenfalls einen Winkelbetrag. In diesem konkreten Ausführungsbeispiel betragen die Stegwandwinkel β ca. 45°. Der Luftstrom L erfährt hier eine zweite Ausrichtung anhand der Streckmetallabdeckung 21, so dass die Resultierende entsprechend des gezeigten Richtungspfeiles P die Streckmetallabdeckung 21 verlässt.

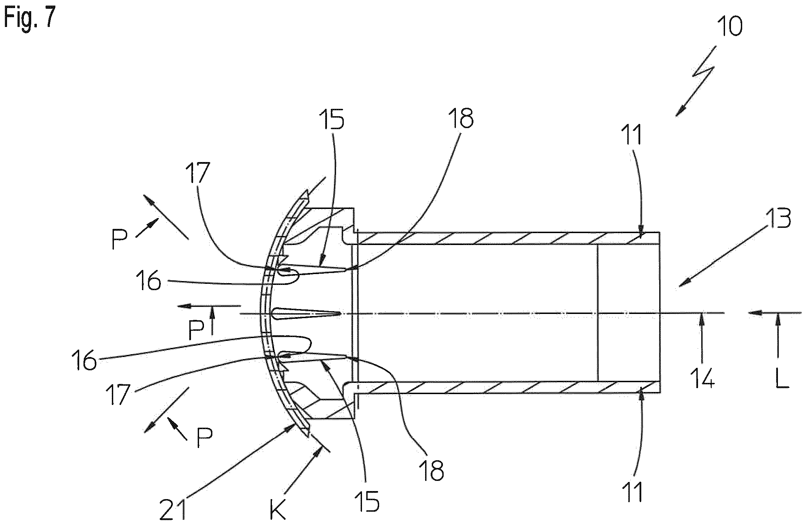

In der Figur 7 ist eine weitere Ausführungsform des Luftausströmers 10 dargestellt. Diese Ausführungsform zeigt eine an der Luftausströmöffnung 12 angeordnete walzenförmig konvex ausgebildete Streckmetallabdeckung 21. Die konvexe Krümmung der Streckmetallabdeckung 21 weist eine Krümmungsebene K auf, welche zu der Schwenkachse 16 der luftleitenden Lamellen 15 parallel ausgerichtet ist.

Die luftleitenden Lamellen 15 des Luftausströmers 10 sind im Gehäuse 11 gehäuselängsachparallel angeordnet, so dass der Luftstrom L parallel zur Gehäuselängsachse 14 vorgerichtet auf die konvex gekrümmte Streckmetallabdeckung 21 geleitet wird.

Das Stegwandwinkelmaß der nicht dargestellten Stegwände 24 (siehe Figur 5 und 6) nimmt mit zunehmendem Abstand von der Gehäuselängsachse 14 zu. Die Stegwände 24 die in gleichem Abstand zur Gehäuselängsachse 14 in der Streckmetallabdeckung 21 eingebracht sind, weisen ein identisches Stegwandwinkelmaß auf.

Die Stegwände 24 spreizen den Luftstrom L aufgrund der unterschiedlichen Stegwandwinkel β nun derart auf, dass der die Streckmetallabdeckung 21 verlassende Luftstrom L fächerartig in den nicht dargestellten Kraftfahrzeuginnenraum entlassen wird. So können die Passagiere oder eine Windschutzscheibe großflächig mit Luft beströmt werden.

Wird der Luftstrom L nun zusätzlich an den zur Gehäuseachse 14 verschwenkten luftleitenden Lamellen 15 vorgerichtet, bleibt der fächerartig austretende Luftstrom in seiner Spreizung zwar identisch, wird allerdings insgesamt in seiner Ausströmlage aus der Streckmetallabdeckung 21 verändert. Eine derartige Luftausströmer 10 dient der individuellen Anpassung des Passagiers, um eine optimale Wohlfühlatmosphäre bereitzustellen.

In einer weiteren Ausführungsform ist es denkbar, dass die Streckmetallabdeckung 21 nicht walzenförmig konvex, sondern oval konvex ausgebildet ist, wodurch eine abgewandelte Fächerspreizung des Luftstrom L möglich ist.

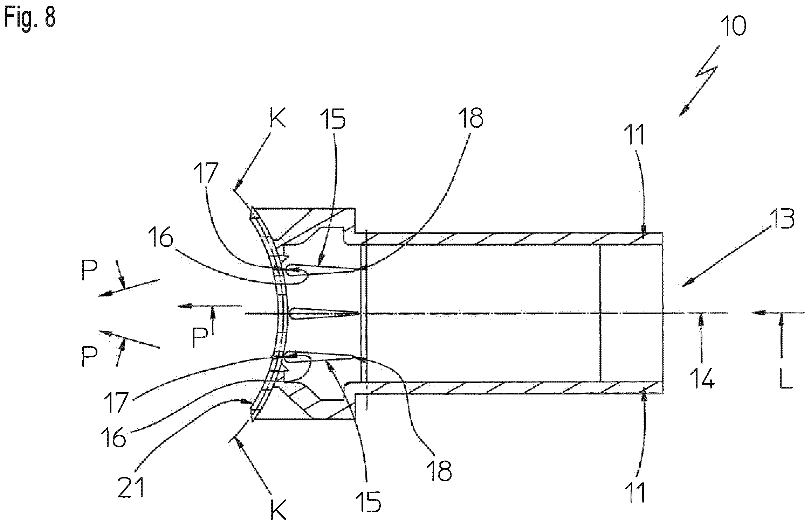

In der Figur 8 ist eine weitere Ausführungsform des Luftausströmers 10 dargestellt. Die Streckmetallabdeckung 21 ist walzenförmig konkav gekrümmt. Diese konkave Krümmung der Streckmetallabdeckung 21 weist eine Krümmungsebene K auf, welche zu der Schwenkachse 16 der luftleitenden Lamellen 15 parallel ausgerichtet ist.

Auch hier nimmt das Stegwandwinkelmaß der nicht dargestellten Stegwände 24 (siehe Figur 5 und 6) mit zunehmendem Abstand von der Gehäuselängsachse 14 zu. Stegwände 24 gleicher Beabstandung zur der Gehäuselängsachse 14 weisen identische Stegwandwinkelmaße auf.

Die luftleitenden Lamellen 15 hinter der Streckmetallabdeckung 21 sind gehäuseachsparallel ausgerichtet, sodass auch der Luftstrom L an den luftleitenden Lamellen 15 gehäuseachsparallel vorgerichtet wird. Die walzenförmige, konkav gekrümmte Streckmetallabdeckung 21 richtet den Luftstrom L nun entsprechend der jeweiligen Stegwandwinkeln β der Streckmetallabdeckung 21 derart aus, dass der die Streckmetallabdeckung 21 verlassenden Luftstrom L aus der Streckmetallabdeckung 21 linienförmig zusammengeführt austritt. Dieser linienförmig austretende Luftstrom L, welcher durch den Pfeil P dargestellt ist, kann beispielsweise gezielt auf eine mit Kondensat bedeckte Stelle an einer nicht dargestellten Windschutzscheibe gerichtet werden, um diese schnell abzutrocknen und ermöglicht somit eine sehr präzise und effektive Belüftung des nicht dargestellten Kraftfahrzeuginnenraumes. Alternativ können Personen im Innenraum spotartig angeströmt werden.

Es ist auch ein Luftausströmer 10 vorstellbar, dessen Luftstrom L aus einer Kombination von verschwenkten luftleitenden Lamellen 15 und einer konkav gekrümmten Steckmetallabdeckung 21 gerichtet wird. Der linienförmig die Streckmetallabdeckung 21 verlassende Luftstrom kann somit in seiner Gesamtheit entsprechend des Schwenkgrades der luftleitenden Lamellen 15 gerichtet werden. Entsprechend des Luftausströmers 10 der Figur 7 trägt auch dieses Ausführungsbeispiel zu einer optimierten Wohlfühlatmosphäre des Fahrgastes bei.

Bei einer weiteren Ausführungsform ist es auch möglich, dass die Streckmetallabdeckung 21 nicht walzenförmig konkav, sondern oval konkav ausgebildet ist, wodurch abgewandelte Strömungsbilder des Luftstrom L möglich sind.

Weiterhin ist es möglich, die Streckmetallabdeckung 21 konvex oder konkav sphärisch auszubilden.

Der an der sphärisch konvex ausgebildeten Streckmetallabdeckung 21 abgelenkte Luftstrom L, wird kegelförmig in den Fahrgastinnenraum entlassen und dient einer besonders großflächigen Beströmung des Fahrgastinnenraumes.

Der Luftstrom L, welcher hingegen an einer sphärisch konkaven ausgebildeten Streckmetallabdeckung 21 abgelenkt wird, wird kegelförmig in den Fahrgastinnenraum entlassen und anschließend an einem Punkt zusammengeführt. Dieser punktfömig abgelenkte Luftstrom L dient einer besonders präzisen Belüftung.

Insgesamt ermöglicht der erfindungsgemäße Luftausströmer 10 eine individuelle Beströmung der Fahrgäste und des Kraftfahrzeugraumes, so dass die Luftausströmung an die jeweilige Situation angepasst werden kann.

### Bezugszeichenliste

- 10: Luftausströmer
- 11: Gehäuse
- 12: Luftausströmöffnung
- 13: Luftausströmöffnung
- 14: Gehäuselängsachse
- 15: luftleitende Lamelle
- 16: Schwenkachse
- 17: luftausströmöffnungsnahe Lamellenkante
- 18: luftausströmöffnungsferne Lamellenkante
- 20: Steuerbauteil
- 21: Streckmetallabdeckung
- 22: Masche
- 23: Steg
- 24: Stegwand

- K: Krümmungsebene
- L: Luftstrom
- P: Richtungspfeil
- X: Richtungspfeil

- α: Lamellenwinkel
- β: Stegwandwinkel

## Patentansprüche

1. Luftausströmer (10) für den Innenraum eines Kraftfahrzeugs,
- mit einem Gehäuse (11), welches eine Gehäuselängsachse (14) aufweist,
- mit einer vom Gehäuse (11) ausgebildeten Luftaustrittsöffnung (12),
- mit einer den aus der Luftaustrittöffnung (12) verlassenden Luftstrom (L) ausrichtenden Lamelle (15), welche im Gehäuse (11) angeordnet ist, wobei die Luftaustrittsöffnung (12) des Luftausströmers (10) mit einer Streckmetallabdeckung (21) versehen ist, welche Maschen (22) aufweist, die von Stegen (23) eingefasst sind, welche Stegwände (24) ausbilden, die in einem Winkel (β) zur Gehäuselängsachse (14) stehen, die Lamelle (15) zum Ausrichten des Luftstroms (L) in einem Winkel (α) zur Gehäuselängsachse (14) angeordnet ist und wenigstens eine streckmetallnahe und eine streckmetallferne Kante (17, 18) aufweist, wobei
- die streckmetallnahe Kante (17) derart dicht an der Streckmetallabdeckung (21) angeordnet ist, dass der die Streckmetallabdeckung (21) verlassende Luftstrom (L) im Wesentlichen definiert gerichtet ist, wobei sich die Richtung des austretenden Luftstroms (L) als Resultierende des Lamellenwinkels (α) und des Stegwandwinkels (β) ergibt, **dadurch gekennzeichnet, dass** mehrere parallel zueinander ausgerichtete Lamellen (15) im Gehäuse (11) angeordnet sind, wobei die Lamellen (15) um eine Achse (16) schwenkbar im Gehäuse (11) angeordnet sind, sodass der Lamellenwinkel (α) gegenüber der Gehäuselängsachse (14) veränderbar ist und wobei die streckmetallnahe Kante (17) in einer Lamellenkante ausläuft und wobei die Schwenkachse (16) im Wesentlichen mit der Lamellenkante (17) zusammenfällt.

2. Luftausströmer (10) nach Anspruch 1, **dadurch gekennzeichnet, dass** die Schwenkachse (16) der Lamelle (15) derart streckmetallnah angeordnet ist, dass der durch die Schwenkbewegung der Lamelle (15) zunehmende Abstand zwischen Lamellenkante (17) und Streckmetallabdeckung (21) noch den die Streckmetallabdeckung (21) gerichtet verlassenden Luftstrom (L) ermöglicht.

3. Luftausströmer (10) nach einem der Ansprüche 1 oder 2, **dadurch**
**gekennzeichnet, dass** die Streckmetallabdeckung (21) eine konvexe oder eine konkave Krümmung aufweist, deren Krümmungsebene (K) zur Schwenkachse (16) der Lamelle (15) parallel ausgerichtet ist.

4. Luftausströmer (10) nach Anspruch 3, **dadurch gekennzeichnet, dass** die Stegwände (24) der gekrümmten Streckmetallabdeckung (21) jeweils eine Ebene aufspannen und dass diese jeweils die Gehäuselängsachse (14) schneiden, wobei die jeweiligen Schnittwinkel von Ebene und Gehäuselängsachse (14) mit zunehmendem Abstand der jeweiligen Stegwände (24) von der
Gehäuselängsachse (14) zunehmen.

5. Luftausströmer (10) nach Anspruch 4, **dadurch gekennzeichnet, dass** der Betrag der Schnittwinkeländerung von Schnittwinkel zu Schnittwinkel konstant ist.

6. Luftausströmer (10) nach Anspruch 4, **dadurch gekennzeichnet, dass** der Betrag der Schnittwinkeländerung von Schnittwinkel zu Schnittwinkel unterschiedlich ist.

7. Luftausströmer (10) nach einem der vorhergehenden Ansprüche, **dadurch gekennzeichnet, dass** der Luftausströmer (10) als Defroster für die Windscheibe eines Kraftwagens ausgebildet ist.

## Claims

1. Air vent (10) for the interior of a motor vehicle,
- having a housing (11) which has a housing longitudinal axis (14),
- having an air outlet opening (12) formed by the housing (11),
- having a lamella (15) aligning the air flow (L) leaving the air outlet opening (12), said lamella being arranged in the housing (11), wherein the air outlet opening (12) of the air vent (10) is provided with an expanded metal cover (21) which has meshes (22) bordered by webs (23) which form web walls (24) that are at an angle (β) to the housing longitudinal axis (14), the lamella (15) is arranged to align the airflow (L) at an angle (α) to the housing longitudinal axis (14) and has at least one edge (17, 18) close to the expanded metal and one edge remote from the expanded metal, wherein
- the edge close to the expanded metal (17) is arranged in a sealing manner on the expanded metal cover (21) in such a way that the air flow (L) leaving the expanded metal cover (21) is substantially directed in a defined manner, wherein the direction of the outgoing air flow (L) arises as the result of the lamella angle (α) and the web wall angle (β), **characterised in that** a plurality of lamellae (15) aligned in parallel to one another are arranged in the housing (11), wherein the lamellae (15) are arranged in the housing (11) pivotably around an axis (16), such that the lamella angle (α) can be changed with respect to the housing longitudinal axis (14), and wherein the edge close to the expanded metal tapers off in a lamella edge (17), and wherein the pivot axis (16) substantially coincides with the lamella edge (17).

2. Air vent (10) according to claim 1, **characterised in that** the pivot axis (16) of the lamella (15) is arranged close to the expanded metal in such a way that the distance between lamella edge (17) and expanded metal cover (21), which increases due to the pivoting movement of the lamella (15), still enables the outgoing air flow (L) directed towards the expanded metal cover (21).

3. Air vent (10) according to one of claims 1 or 2, **characterised in that** the expanded metal cover (21) has a convex or concave curvature whose plane of curvature (K) is oriented in parallel to the pivot axis (16) of the lamella (15).

4. Air vent (10) according to claim 3, **characterised in that** the web walls (24) of the curved expanded metal cover (21) each span one plane and these each intersect the housing longitudinal axis (14), wherein the respective angles of intersection of plane and housing longitudinal axis (14) increase with increasing distance of the respective web walls (24) from the housing longitudinal axis (14).

5. Air vent (10) according to claim 4, **characterised in that** the amount the angle of intersection is changed by is constant from angle of intersection to angle of intersection.

6. Air vent (10) according to claim 4, **characterised in that** the amount the angle of intersection is changed by is different from angle of intersection to angle of intersection.

7. Air vent (10) according to one of the preceding claims, **characterised in that** the air vent (10) is formed as a defroster for the windscreen of a motor vehicle.

## Revendications

1. Dispositif d'évacuation d'air (10) pour l'habitacle d'un véhicule automobile,
- avec un boîtier (11), lequel présente un axe longitudinal de boîtier (14),
- avec une ouverture de sortie d'air (12) formée par le boîtier (11),
- avec une lamelle (15) orientant le flux d'air (L) sortant de l'ouverture de sortie d'air (12), laquelle est disposée dans le boîtier (11), dans lequel l'ouverture de sortie d'air (12) du dispositif d'évacuation d'air (10) est dotée d'un couvercle en métal déployé (21), lequel présente des mailles (22) qui sont entourées de barrettes (23), lesquelles forment des parois nervurées (24) qui sont disposées selon un angle (β) par rapport à l'axe longitudinal du boîtier (14), la lamelle (15) est disposée pour orienter le flux d'air (L) selon un angle (α) par rapport à l'axe longitudinal du boîtier (14) et présente au moins un bord proche du métal déployé et un bord éloigné du métal déployé (17, 18), dans lequel
- le bord proche du métal déployé (17) est disposé près du couvercle en métal déployé (21) de telle sorte que le flux d'air (L) sortant du couvercle en métal déployé (21) est orienté de façon sensiblement définie, la direction du flux d'air (L) sortant résultant de l'angle de la lamelle (α) et de l'angle des parois (β), **caractérisé en ce que** plusieurs lamelles (15) orientées parallèlement entre elles sont disposées dans le boîtier (11), les lamelles (15) étant disposées dans le boîtier (11) de manière à pivoter autour d'un axe (16), de sorte que l'angle des lamelles (α) par rapport à l'axe longitudinal du boîtier (14) peut varier, le bord proche du métal déployé (17) se prolongeant par un bord de lamelle et l'axe de pivotement (16) coïncidant sensiblement avec le bord de lamelle (17).

2. Dispositif d'évacuation d'air (10) selon la revendication 1, **caractérisé en ce que** l'axe de pivotement (16) de la lamelle (15) est disposé près du métal déployé de telle sorte que la distance entre le bord de lamelle (17) et le couvercle en métal déployé (21) augmentant du fait du pivotement de la lamelle (15) permet encore au flux d'air (L) de sortir selon une orientation du couvercle en métal déployé (21).

3. Dispositif d'évacuation d'air (10) selon une des revendications 1 ou 2, **caractérisé en ce que** le couvercle en métal déployé (21) présente une courbure convexe ou concave dont le plan de courbure (K) est orienté parallèlement à l'axe de pivotement (16) de la lamelle (15).

4. Dispositif d'évacuation d'air (10) selon la revendication 3, **caractérisé en ce que** les parois nervurées (24) du couvercle de métal déployé courbe (21) s'étendent chacune dans un plan et que ceux-ci coupent chacun l'axe longitudinal du boîtier (14), les différents angles de coupe des plans et de l'axe longitudinal du boîtier (14) augmentant avec l'augmentation de la distance des différentes parois nervurées (24) par rapport à l'axe longitudinal du boîtier (14).

5. Dispositif d'évacuation d'air (10) selon la revendication 4, **caractérisé en ce que** la valeur de la variation d'angle de coupe d'un angle de coupe à un autre est constante.

6. Dispositif d'évacuation d'air (10) selon la revendication 4, **caractérisé en ce que** la valeur de la variation d'angle de coupe d'un angle de coupe à un autre est variable.

7. Dispositif d'évacuation d'air (10) selon une des revendications précédentes, **caractérisé en ce que** le dispositif d'évacuation d'air (10) est configuré comme un dégivreur pour le pare-brise d'une automobile.
